# EUROPÄISCHE PATENTSCHRIFT

(11) **EP 0 570 341 B1**
(45) Veröffentlichungstag und Bekanntmachung des Hinweises auf die Patenterteilung: **18.09.1996**
(21) Anmeldenummer: 93810340.5
(22) Anmeldetag: 11.05.1993
(51) Int. Cl.: B01D 63/10, B01D 61/46, C02F 1/469

(54) **Vorrichtung zur kontinuierlichen elektrochemischen Entsalzung wässriger Lösungen**
Apparatus for the continuous electrochemical desalination of aqueous solutions
Dispositif pour le dessalement electrochimique en continu de solutions aqueuses

(30) Priorität: 15.05.1992 CH 1569/92; 26.11.1992 CH 3627/92
(43) Veröffentlichungstag der Anmeldung: 18.11.1993
(73) Patentinhaber: Christ AG, CH-4147 Aesch (CH)
(72) Erfinder: Rychen, Philippe, F-68640 Muespach-le-Haut (FR); Alonso, Samuel, CH-4147 Aesch (CH); Alt, Hans-Peter, W-7888 Rheinfelden (DE); Gensbittel, Dominique, F-68330 Huningue (FR)
(74) Vertreter: Zimmermann, Hans, Dr.

(56) Entgegenhaltungen:
- DE-A- 1 924 000
- FR-A- 2 267 118
- GB-A- 489 654
- US-A- 2 650 709
- US-A- 3 585 131
- US-A- 4 225 413

## Beschreibung

Die Erfindung betrifft eine neue Vorrichtung zur kontinuierlichen elektrochemischen Entsalzung wässriger Lösungen in Form eines Wickelmoduls.

Es ist bereits seit einiger Zeit bekannt, dass wässrige Lösungen mittels Elektrodialyse entsalzt werden können. Entsprechende Verfahren und Vorrichtungen sind beispielsweise in US-A-2,741,591, US-A-4,931,160, US-A-4,956,071, US-A-4,964,970, EP-B-0 113 387 und Desalination 16, 225-233 (1975), Elsevier Scientific Publishing Co., Amsterdam beschrieben.

Gemäss den bekannten Methoden werden in der Regel zwischen den an eine Gleichstromquelle angeschlossenen Elekroden abwechselnd wasserundurchlässige Anionen- und Kationenaustauschermembranen angeordnet. Der Raum zwischen zwei benachbarten Membranen definiert jeweils eine Verdünnungskammer bzw. eine Konzentrierungskammer. Wird die zu entsalzende Lösung durch eine Verdünnungskammer geleitet, so können unter dem Einfluss des elektrischen Potentials Anionen in Richtung zur Anode durch die Anionenaustauschermembran und Kationen in Richtung zur Kathode durch die Kationenaustauschermembran in die benachbarte Konzentratkammer wandern. Andererseits können aus der Konzentratkammer Anionen nicht durch die Kationenaustauschermembran in Richtung zur Anode und Kationen nicht durch die Anionenaustauschermembran in Richtung zur Kathode wandern. Durch den Einfluss des elektrischen Potentials wird somit eine kontinuierliche Verdünnung der gelösten Salze in den Verdünnungskammern und eine kontinuierliche Konzentrierung in den Konzentratkammern erreicht.

Es ist ebenfalls bekannt und zum Teil in den eingangs genannten Druckschriften beschrieben, dass die Verwendung von Ionenaustauscherharzen in den Verdünnungs-und/oder Konzentratkammern zum Ionenaustausch beiträgt und die Leitfähigkeit verbessert, und dass andererseits die Ionenaustauscherharze unter Einwirkung des elektrischen Stromes regeneriert werden. Die Elektrodialyse unter Verwendung von Ionenaustauscherharzen wird zur Unterscheidung gelegentlich auch als Elektrodiarese bezeichnet.

In den bekannten Vorrichtungen werden die Ionenaustauschermembranen meist in Reihe parallel zueinander und zu den Elektroden als Stapel angeordnet. Diese Anordnung hat jedoch die Nachteile, dass für jede Verdünnungs-und Konzentratkammer separate Zufluss- und Abflusssysteme erforderlich sind und unerwünscht hohe Stromverluste auftreten. Zudem werden aufwendige Pressvorrichtungen zur Abdichtung des Membranstapels benötigt, wobei trotzdem häufig undichte Stellen zwischen den Verdünnungskammern und den Konzentratkammern auftreten können.

Um diese Nachteile zu vermeiden, wurde in US-A-4,225,413 eine Elektrodialysevorrichtung in Form eines Wickelmoduls vorgeschlagen, bei welchem die Anionenaustauschermembran und die Kationenaustauschermembran um einen zylinderförmigen, nicht leitenden Kern gewickelt werden. Gewickelte Membrananordnungen waren in FR-A-2,267,118, US-A-2,650,709 und GB-A-489,654 bereits für Dialysegeräte vorgeschlagen worden.

Bei der Elektrodialysevorrichtung gemäss US-A-4,225,413 ist im Innern des nicht leitenden Kerns eine zentrische Elektrode angeordnet und die Gegenelektrode bildet die äussere Umhüllung. Durch die gewickelte Membrananordnung wird eine Verdünnungskammer und eine Konzentratkammer mit annähernd spiralförmigem Querschnitt definiert, die je ein separates Verteil- und Abnahmesystem aufweisen. Die inneren Enden der Ionenaustauschermembranen werden durch eine Oeffnung im nicht leitenden Kern ins Innere der zentrischen Elektrode geführt und werden untereinander und mit dem nicht leitenden Kern mittels Wärme oder Klebstoff verklebt. Desgleichen müssen die äusseren Enden der Ionenaustauschermembranen untereinander verklebt werden. Die Ionenaustauschermembranen weisen zu diesem Zweck jeweils an beiden Enden zwei Ränder auf.

Die vorbekannte Anordnung ist relativ schwierig zu bewerkstelligen, insbesondere ist das Verkleben verschiedener Ionenaustauschermembranen oft problematisch und birgt eine erhebliche Gefahr von möglichen Leckagen. Dies liegt vor allem daran, dass einerseits viele der bekannten Ionenaustauschermembranen dauernd in feuchtem Zustand gehalten werden müssen und daher nur schlecht verklebt werden können; anderseits besitzen Ionenaustauschermembranen, die trocken bearbeitet werden können, in der Regel eine gewisse, störende Wasserdurchlässigkeit. Es ist ebenfalls störend, dass die Verdünnungskammer und die Konzentratkammer über der Oeffnung im nicht leitenden Kern einen "Buckel" bilden und damit die Erzielung eines gleichbleibenden Querschnitts der Kammern sowie eine gleichmässige Aenderung des Abstands von den Elektroden erheblich erschwert oder sogar verunmöglicht werden.

Der vorliegenden Erfindung liegt die Aufgabe zugrunde, eine Vorrichtung zur kontinuierlichen elektrochemischen Entsalzung wässriger Lösungen in Form eines Wickelmoduls zu schaffen, welches die Vorteile des vorbekannten Wickelmoduls aufweist, aber dessen Nachteile möglichst weitgehend vermeidet. Diese Aufgabe wird durch die in Anspruch 1 definierte Vorrichtung gelöst.

Die zentrische Elektrode und die äussere Gegenelektrode weisen vorzugsweise annähernd die Form eines Zylinders bzw. Hohlzylinders auf, wobei sie, wie unten beschrieben, von der Zylinderform insbesondere dadurch abweichen können, dass sie zumindest auf einem Teil ihres Umfanges eine Verjüngung und/oder eine Ausnehmung zur Aufnahme der inneren Klemmvorrichtung bzw. des inneren Kunstharzblocks aufweisen können. Die Elektroden können aus üblichen Materialien bestehen. Bevorzugte Anodenmaterialien sind Graphit und mit Edelmetall beschichteter Titanstahl; bevorzugtes Kathodenmaterial ist rostfreier Stahl. Es ist für das Entsalzungsverfahren im allgemeinen ohne Belang, ob die zentrische Elektrode als Anode und die äussere Gegenelektrode als Kathode oder die zentrische Elektrode als Kathode und die äussere Gegenelektrode als Anode gewählt werden. Die zentrische Elektrode kann massiv oder hohl sein, wobei sie im letzteren Falle vorzugsweise mit einem geeigneten Material, beispielsweise einem Kunststoff wie Polyvinylchlorid, Polyethylen oder Polypropylen, gefüllt ist.

Als Anionenaustauschermembran und als Kationenaustauschermembran eignen sich erfindungsgemäss grundsätzlich alle üblicherweise verwendbaren permselektiven Ionenaustauschermembranen.

Die Verdünnungskammer und/oder die Konzentratkammer können zur Verbesserung des Ionenaustausches und der Leitfähigkeit gewünschtenfalls ein Ionenaustauscherharz enthalten. Hierzu eignen sich übliche Ionenaustauscherharze, und es können sowohl Einzelharze als auch Mischbettharze verwendet werden. In Kammern, die ein Ionenaustauscherharz enthalten, kann grundsätzlich auf einen Abstandhalter verzichtet werden; es empfiehlt sich jedoch in diesem Fall, an den beiden Stirnflächen einen Abstandhalter anzuordnen, um die Einhaltung des gewünschten Abstandes besser zu gewährleisten. In Kammern, die kein Ionenaustauscherharz enthalten wird hingegen zur Gewährleistung des Flusses und zur Turbulenzerzeugung vorzugsweise über die gesamte Fläche der Kammer ein Abstandhalter verwendet. Hierzu eignet sich beispielsweise ein Kunststoffgitter oder ein Kunststoffgeflecht. Der Abstandhalter kann am Verteil- bzw. Abnahmesystem beispielsweise mittels Klebstoff befestigt werden oder in den Klemmvorrichtungen bzw. in den Kunstharzblöcken fest verankert werden.

Die Verdünnungskammer und die Konzentratkammer werden in ihrer Länge jeweils vom eigenen Verteil- bzw. Abnahmesystem begrenzt. Die wasserundurchlässigen Ionenaustauschermembranen werden an ihrem inneren und äusseren Ende um das Verteilsystem für die zu behandelnde Lösung bzw. um das Abnahmesystem für das entsalzte Wasser herumgeführt und hinter dem Verteil- bzw. Abnahmesystem in einer Klemmvorrichtung so eingeklemmt bzw. in einem Kunstharzblock so verankert, dass die Verdünnungskammer gegenüber der Konzentratkammer und gegen die Elektroden hin abgedichtet ist. Die Konzentratkammer ist hingegen zu den Elektroden hin offen, wodurch das Konzentrat gleichzeitig als Elektrodenspüllösung dienen kann. Die hohe Salzkonzentration erleichtert dabei die Ausspülung von Nebenprodukten und den optimalen Einsatz der Elektroden. Der Konzentratkammer kann daher über ihr Verteilsystem vorzugsweise ein stark konzentrierter Elektrolyt zugeführt werden. Die Zufuhr von Wasser oder von verdünnten wässrigen Lösungen ist jedoch grundsätzlich ebenfalls geeignet.

Das Konzentrat und das Diluat können in der Konzentratkammer bzw. der Verdünnungskammer in Normalstrom oder im Gegenstrom zueinander, vom Zentrum der Spirale nach aussen fliessen oder umgekehrt.

Die Verteil- und Abnahmesysteme der Konzentratund Verdünnungskammer können beispielsweise als Rohre mit Durchflussöffnungen ausgebildet sein.

Die gesamte Wicklung inklusive Elektroden wird vorzugsweise von einem verstärkten Kunststoffmantel umgeben, so dass es als geschlossenes Rohr nach aussen hin ersichtlich ist und druckbeständig ist. Die beiden Stirnseiten des Wickelmoduls werden zweckmässigerweise dicht verschlossen. Dies kann beispielsweise dadurch erfolgen, dass die beiden Stirnseiten des Wickelmoduls in einen Epoxyharzblock eingegossen werden. Die hydraulischen Anschlüsse und die elektrischen Anschlüsse an eine Gleichstromquelle können grundsätzlich beliebig angeordnet werden; vorzugsweise sind sie jedoch auf den Stirnseiten des Wickelmoduls angeordnet.

Vorzugsweise kann die zentrische Elektrode auf einem Teil ihres Umfanges in axialer Richtung eine Ausnehmung zur Aufnahme der inneren Klemmvorrichtung bzw. des inneren Kunstharzblocks aufweisen. Dadurch wird erreicht, dass Abweichungen vom gewünschten spiralförmigen Querschnitt der Wicklung, die durch die innere Klemmvorrichtung bzw. den inneren Kunstharzblock verursacht werden könnten, vermieden werden, und ferner erreicht, dass möglichst wenig Elektrodenfläche verloren geht.

Nach der ersten Wicklung kommen die Konzentratkammer und die Verdünnungskammer über die Konzentratkammer und die Verdünnungskammer der inneren Wicklung zu liegen, was bei Verwendung einer zylinderförmigen zentrischen Elektrode ebenfalls zu einer gewissen Abweichung vom gewünschten, spiralförmigen Querschnitt führt. Diese Abweichung kann je nach Dicke der Konzentratkammer und der Verdünnungskammer sowie der Anzahl der Wicklungen mehr oder weniger störend sein. Um dies zu vermeiden und eine möglichst gleichmässige, spiralförmige Wicklung der Membranen zu erzielen, kann die zentrische Elektrode vorzugsweise mindestens auf einem Teil ihres Umfanges auf der in Wicklungsrichtung liegenden Seite der Klemmvorrichtung eine von der zylindrischen Form abweichende Verjüngung in Gegenrichtung zur Wicklungsrichtung der Membranen aufweisen. Die Verjüngung wird vorzugsweise so gewählt, dass sie den Einfluss der inneren Wicklung ganz oder teilweise ausgleicht, d.h. dass die Verjüngung höchstens der Dicke der Verdünnungs- und der Konzentratkammer zusammen entspricht.

Die äussere Gegenelektrode kann ebenfalls eine entsprechende Verjüngung aufweisen, um einen möglichst gleichmässigen Abstand von der spiralförmigen Wicklung der Membranen zu erzielen, d.h. sie kann vorzugsweise mindestens auf einem Teil ihres Umfanges auf der in Wicklungsrichtung liegenden Seite der äusseren Klemmvorrichtung bzw. des äusseren Kunstharzblocks eine von der zylindrischen Form abweichende Verjüngung in Gegenrichtung zur Wicklungsrichtung der Membranen aufweisen. Die Verjüngung entspricht ebenfalls vorzugsweise höchstens der Dicke der Verdünnungs- und der Konzentratkammer zusammen.

Die Verjüngung der zentrischen Elektrode bzw. der äusseren Gegenelektrode kann beispielsweise auf 180° ihres Umfanges erfolgen. Wenn sowohl die zentrische Elektrode wie auch die äussere Gegenelektrode eine Verjüngung aufweisen, dann werden diese Verjüngungen vorzugsweise so übereinander angeordnet, dass ein möglichst gleichbleibender Elektrodenabstand gewährleistet ist.

Wenn die äussere Gegenelektrode eine Verjüngung aufweist, so kann die äussere Klemmvorrichtung bzw. der äussere Kunstharzblock vorzugsweise so ausgebildet sein, dass dadurch der durch die Verjüngung gebildete Spalt verschlossen wird. Insbesondere kann die Klemmvorrichtung bzw. der Kunstharzblock auch so ausgebildet sein, dass dadurch die Verjüngung der äusseren Gegenelektrode zur Zylinderform ergänzt wird.

Die innere bzw. äussere Klemmvorrichtung kann vorzugsweise als Membranpresssystem aus zwei Teilen ausgebildet sein, zwischen denen ein Dichtungsmaterial angeordnet ist, wobei der dichte Verschluss der Verdünnungskammer dadurch erreicht wird, dass die beiden Membranen zwischen dem Dichtungsmaterial und je einem der beiden Teil des Membranpresssystems hindurchgeführt und die beiden Teile mit mechanischen Mitteln, z.B. mittels Schrauben, Nieten etc., gegeneinander gepresst werden. Vorzugsweise können ferner die beiden Teile des Membranpresssystems so ausgebildet sein, dass damit auch das Verteil- bzw. Abnahmesystem der Verdünnungskammer und im Fall der äusseren Klemmvorrichtung gewünschtenfalls auch das Verteil- bzw. Abnahmesystem der Konzentratkammer festgeklemmt werden kann. Das an der zentrischen Elektrode vorgesehene Abnahme- bzw. Verteilsystem der Konzentratkammer kann beispielsweise in einem der Teile des Membranpresssystems angeordnet werden. Dies wird vorzugsweise dadurch erreicht, dass einer der beiden Teile des Membranpresssystems der inneren Klemmvorrichtung eine Ausnehmung zur Aufnahme des Abnahme- bzw. Verteilsystems der Konzentratkammer aufweist.

Erfindungsgemäss kann die Verdünnungskammer auch dadurch gegen die Konzentratkammer und die Elektroden hin dicht verschlossen werden, dass die inneren Ränder bzw. die äusseren Ränder der beiden Ionenaustauschermembranen in einem Kunstharzblock fest verankert werden. Hierzu werden die Ränder der Ionenaustauschermembranen zweckmässigerweise in das Kunstharz "eingegossen". Dies kann vorzugsweise dadurch erfolgen, dass die Ränder der Ionenaustauschermembranen bei der Herstellung des Kunstharzes in die Reaktionslösung eingetaucht werden. Zur Verankerung der Ionenaustauschermembranen eignen sich Kunststoffmaterialien wie Polyurethane, Epoxidharze, Polyester und dergleichen. Eine besonders geeignete Klasse von Kunstharzen sind die Duroplaste. Vorzugsweise kann auch das Verteil-bzw. Abnahmesystem der Verdünnungskammer im Kunstharzblock fest verankert, d.h. auf einem Teil seines Umfanges in diesen "eingegossen" werden, oder es kann in einer entsprechenden Ausnehmung des Kunstharzblocks nach dessen Bildung untergebracht werden. Im Falle des inneren Kunstharzblocks kann gewünschtenfalls auch das Verteil- bzw. Abnahmesystem der Konzentratkammer im Kunstharzblock fest verankert oder in einer entsprechenden Ausnehmung angeordnet sein. In der Verdünnungskammer und/oder in der Konzentratkammer allenfalls vorhandene Abstandhalter können vorzugsweise ebenfalls im Kunstharzblock verankert, d.h. entlang ihrer inneren bzw. äusseren Ränder in den Kunstharzblock "eingegossen" sein.

Durch die erfindungsgemässe, spiralwickelförmige Anordnung kann die Zahl der Verteil- und Abnahmesysteme auf ein Minimum reduziert und ein ideales elektrisches Feld aufgebaut werden, das die Strom/Spannungs-Verluste vermindert. Die spiralwickelförmige Anordnung ermöglicht zudem ein sehr hohes Membranflächen/Volumen-Verhältnis und eine hohe Verfahrensweglänge bei einer einzigen hydraulischen Zelle. Zur Elektrodenspülung und zur Konzentratspülung genügt ein einziger Kreislauf. Weiterhin ermöglichen die erfindungsgemäss vorgesehenen Klemmvorrichtungen bzw. Kunstharzblöcke eine optimale, einfache und sichere Abdichtung der zwei gegenüberliegenden Kammern. Das erfindungsgemässe Wickelmodul ermöglicht die Entsalzung von wässrigen Lösungen auch bei relativ hohen hydraulischen Leistungen von beispielsweise bis zu etwa einem Kubikmeter pro Stunde bei Verwendung eines Moduls mit einer Länge von ca. 1 m und einem Durchmesser von 20-25 cm.

Bevorzugte Ausführungsformen der erfindungsgemässen Vorrichtung sind in den Figuren 1 bis 5 dargestellt.

Figur 1 zeigt eine teilweise geschnittene perspektivische Darstellung des erfindungsgemässen Wickelmoduls.

In Figur 2 ist eine bevorzugte Ausführungsform der inneren Klemmvorrichtung im Detail dargestellt.

Figuren 3 und 4 zeigen einen ausschnittweisen bzw. vollständigen Querschnitt durch das Wickelmodul senkrecht zu seiner Längsachse.

Figur 5 zeigt im Querschnitt ein Wickelmodul, bei dem die inneren und die äusseren Ränder der Ionenaustauschermembranen je in einem Kunstharzblock verankert sind.

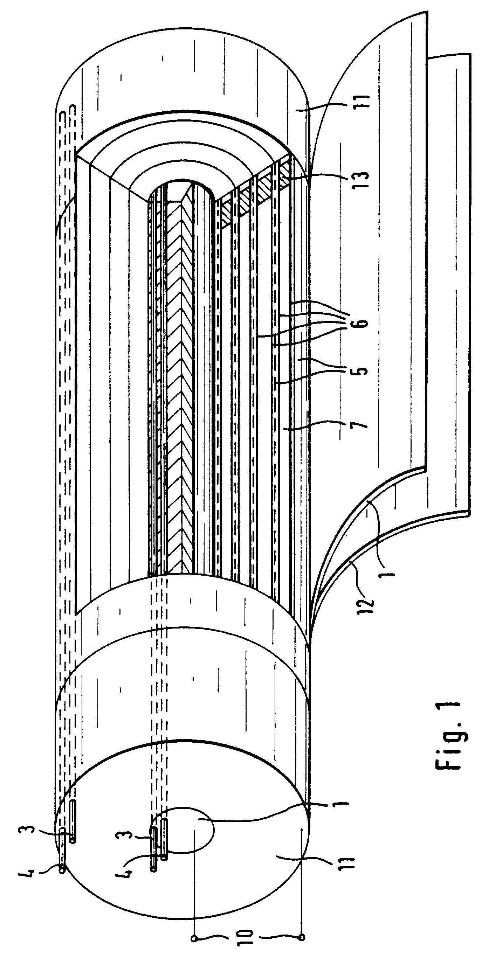

Figur 1 zeigt in perspektivischer Darstellung die Wicklung einer Anionen- und einer Kationenaustauschermembrane 6 und eine zentrische Elektrode 1, eine Verdünnungskammer 7 mit an der Stirnseite angeordnetem Abstandhalter 13, eine Konzentratkammer mit Abstandhalter 5, ein Konzentratverteilsystem bzw. -abnahmesystem 4, ein Verteilsystem für die zu behandelnde Lösung bzw. ein Wasserabnahmesystem 3, die äussere Gegenelektrode 1, welche von einem Kunststoffmantel 12 umhüllt ist, sowie stirnseitige Epoxyharzblöcke 11 und elektrische Anschlüsse 10 an die Gleichstromquelle.

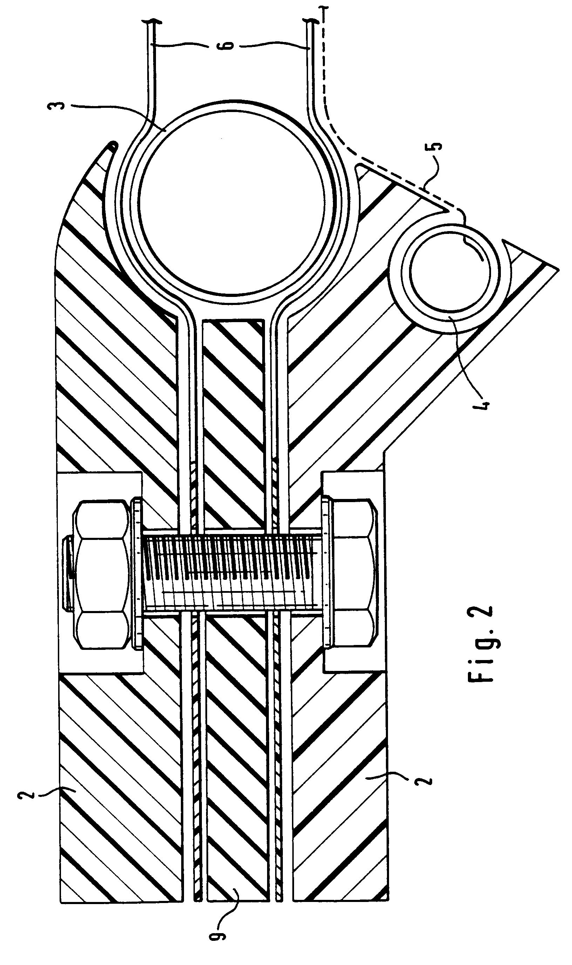

Figur 2 zeigt eine bevorzugte Ausführungsform der inneren Klemmvorrichtung im Querschnitt senkrecht zu seiner Längsabmessung. Die Klemmvorrichtung besteht aus einem Membranpresssystem 2 aus zwei Teilen, zwischen denen ein Dichtungsmaterial 9 angeordnet ist, und die Kationen- und Anionenaustauschermembran 6 zwischen dem Dichtungsmaterial und je einem der Teile des Membranpresssystems hindurch geführt sind. Durch Zusammenpressen der Teile des Membranpresssystems 2 mittels Verschrauben wird die Verdünnungskammer dicht abgeschlossen. Die Abbildung zeigt ferner Ausnehmungen an beiden Teilen des Membranpresssystems 2, welche so an das Verteil- bzw. Abnahmesystem 3 der Verdünnungskammer angepasst sind, dass dieses durch die Klemmvorrichtung ebenfalls festgeklemmt werden kann. Weiterhin zeigt einer der beiden Teile des Membranpresssystems 2 eine Ausnehmung zur Aufnahme des Konzentratverteilsystems bzw. -abnahmesystems 4. Durch eine gestrichelte Linie ist ferner die Lage des Konzentratkammerabstandhalters 5 angedeutet.

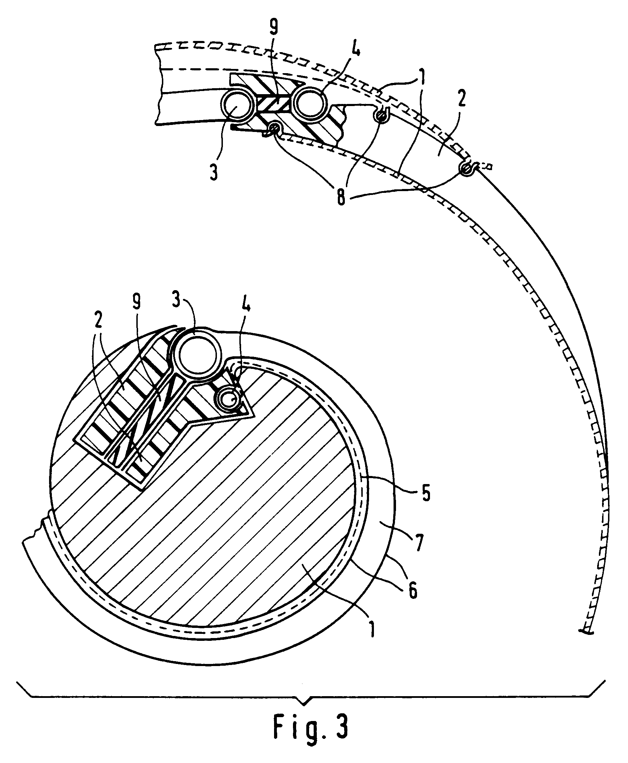

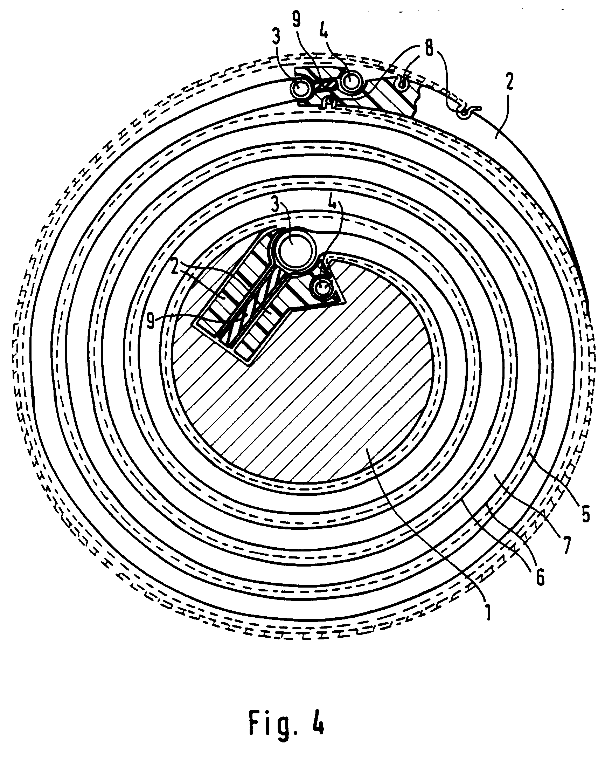

Figuren 3 und 4 zeigen einen Querschnitt senkrecht zur Längsachse des Wickelmoduls, wobei in Figur 4 der gesamte Querschnitt dargestellt ist und in Figur 3 zur besseren Verdeutlichung der Klemmvorrichtungen und der Verjüngung der Elektroden nur ein Ausschnitt des Querschnitts abgebildet ist und die Membranwicklungen weggelassen wurden. Die Figuren zeigen die zentrische Elektrode bzw. äussere Gegenelektrode 1, das zweiteilige Membranpresssystem 2, das Verteil- bzw. Abnahmesystem 3 der Verdünnungskammer 7, das Verteil- bzw. Abnahmesystem 4 der Konzentratkammer, den Konzentratkammerabstandhalter 5, die Ionenaustauschermembranen 6, die Halterungen 8 für die äussere Klemmvorrichtung und das Dichtungsmaterial 9 zwischen den beiden Teilen des Membranpresssystems.

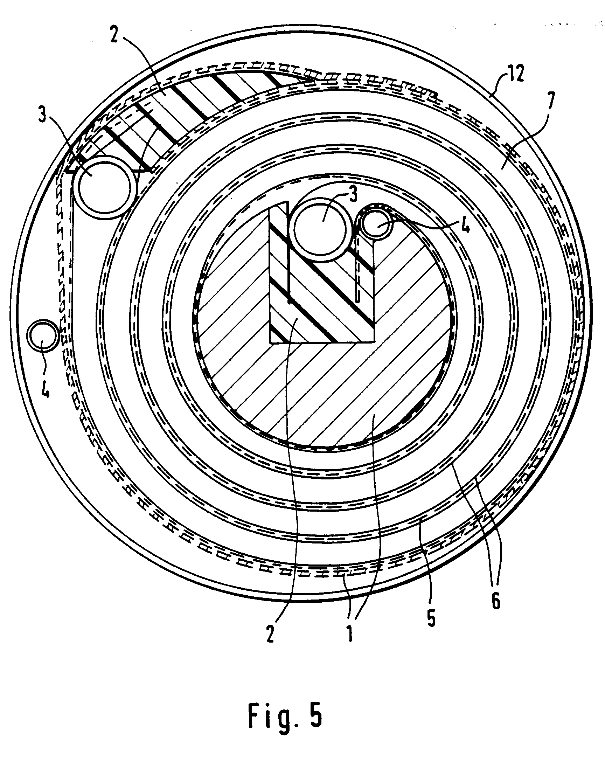

Figur 5 zeigt im Querschnitt senkrecht zur Längsachse des Wickelmoduls eine zentrische Elektrode 1, die mit einem Kunststoff gefüllt ist und eine Ausnehmung zur Aufnahme des inneren Kunstharzblocks 2 aufweist, eine Anionen- und eine Kationenaustauschermembrane 6, deren spiralförmige Wicklung eine Verdünnungskammer 7 und eine Konzentratkammer mit Abstandhalter 5 einschliessen, einen inneren und einen äusseren Kunstharzblock 2, in dem die inneren bzw. die äusseren Ränder der Ionenaustauschermembranen 6 und des Abstandhalters 5 sowie das Verteilsystem für die zu behandelnde Lösung bzw. das Wasserabnahmesystem 3 verankert sind, eine der spiralförmigen Wicklung angepasste äussere Gegenelektrode 1 mit Durchlassöffnungen, ein Konzentratverteilsystem bzw. -abnahmesystem 4 und einen druckbeständigen Kunststoffmantel und/oder ein druckbeständiges Stahlrohr 12.

In den Figuren 1-5 ist aus Gründen der besseren Anschaulichkeit die Konzentratkammer mit einem Abstandhalter 5 dargestellt. Es versteht sich, dass der Abstandhalter allenfalls fehlen kann oder, vorzugsweise, sowohl die Konzentratkammer als auch die Diluatkammer einen Abstandhalter aufweisen können.

In den Figuren 1-5 sind Teile mit vertauschbaren Funktionen, nämlich die Elektroden 1, die Verteil- bzw. Abnahmesysteme 3 und 4 und die Ionenaustauschermembranen 6, jeweils mit gleichen Bezugszeichen versehen. Wie bereits oben erwähnt, kann die zentrische Elektrode als Anode und die äussere Gegenelektrode als Kathode gewählt werden oder die zentrische Elektrode als Kathode und die äussere Gegenelektrode als Anode. Die Anordnung der Ionenaustauschermembranen ergibt sich aus der Wahl der Elektrode, indem folgerichtig jeweils die Diluatkammer in Richtung zur Anode durch die Anionenaustauschermembrane und in Richtung zur Kathode durch die Kationenaustauschermembrane begrenzt ist. Der Diluatstrom und der Konzentratstrom können unabhängig voneinander, d.h. im Normalstrom oder im Gegenstrom, von innen nach aussen oder von aussen nach innen geführt werden. Dementsprechend kann jeweils das Verteilsystem innen und das Abnahmesystem aussen angeordnet sein oder umgekehrt.

## Patentansprüche

1. Vorrichtung zur kontinuierlichen elektrochemischen Entsalzung wässriger Lösungen mittels Gleichstrom in Form eines Wickelmoduls mit einer zentrischen Elektrode (1), um die eine Anionenaustauschermembran und eine Kationenaustauschermembran (6) so gewickelt sind, dass ein Aufbau mit zumindest annähernd spiralförmigem Querschnitt vorliegt und die Ionenaustauschermembranen (6) entlang ihrer spiralförmigen Wicklung eine Verdünnungskammer (7) und eine Konzentratkammer einschliessen, und mit einer äusseren, konzentrisch angeordneten Gegenelektrode (1), die die gewickelte Membrananordnung umhüllt, wobei
- sowohl die inneren Ränder der beiden Ionenaustauschermembranen (6) als auch die äusseren Ränder der beiden Ionenaustauschermembranen (6) miteinander mittels einer Klemmvorrichtung (2) so verschlossen sind oder in einem Kunstharzblock (2) so verankert sind, dass die Verdünnungskammer (7) gegen die Konzentratkammer und die Elektroden (1) hin dicht verschlossen ist und die Konzentratkammer zu den Elektroden hin offen ist,
- die Verdünnungskammer (7) ein Verteilsystem für die zu behandelnde Lösung und ein Abnahmesystem für das entsalzte Wasser (3) aufweist, von denen eines an der inneren Begrenzung der Verdünnungskammer und das andere an der äusseren Begrenzung der Verdünnungskammer angeordnet ist, und in der Verdünnungskammer (7) ein Ionenaustauscherharz und/oder ein Abstandhalter untergebracht ist,
- die Konzentratkammer ein Verteilsystem und ein Abnahmesystem (4) für die Konzentratspülung aufweisen, von denen eines an der inneren Begrenzung der Konzentratkammer, entlang der zentrischen Elektrode (1) und das andere an der äusseren Begrenzung der Konzentratkammer, entlang der äusseren Gegenelektrode (1) angeordnet ist, und in der Konzentratkammer ein Ionenaustauscherharz und/oder ein Abstandhalter (5) untergebracht ist, und
- die beiden Stirnseiten (11) der Vorrichtung dicht verschlossen sind.

2. Vorrichtung nach Anspruch 1, dadurch gekennzeichnet, dass die zentrische Elektrode (1) auf einem Teil ihres Umfanges in axialer Richtung eine Ausnehmung zur Aufnahme der inneren Klemmvorrichtung bzw. des inneren Kunstharzblocks (2) aufweist.

3. Vorrichtung nach Anspruch 2, dadurch gekennzeichnet, dass die zentrische Elektrode (1) zur Erzielung einer gleichmässigen, spiralförmigen Wicklung der Membranen (6) mindestens auf einem Teil ihres Umfanges auf der in Wicklungsrichtung liegenden Seite der Klemmvorrichtung bzw. des Kunstharzblocks (2) eine von der zylindrischen Form abweichende Verjüngung in Gegenrichtung zur Wicklungsrichtung der Membranen (6) aufweist.

4. Vorrichtung nach Anspruch 3, dadurch gekennzeichnet, dass die Verjüngung des Umfanges der zentrischen Elektrode (1) höchstens der Dicke der Verdünnungs- und der Konzentratkammer zusammen entspricht.

5. Vorrichtung nach einem der Ansprüche 1 bis 4, dadurch gekennzeichnet, dass die äussere Gegenelektrode (1) zur Erzielung eines möglichst gleichmässigen Abstandes von der spiralförmigen Wicklung der Membranen (6) mindestens auf einem Teil ihres Umfanges auf der in Wicklungsrichtung liegenden Seite der äusseren Klemmvorrichtung bzw. des äusseren Kunstharzblocks (2) eine von der zylindrischen Form abweichende Verjüngung in Gegenrichtung zur Wicklungsrichtung der Membranen (6) aufweist.

6. Vorrichtung nach Anspruch 5, dadurch gekennzeichnet, dass die äussere Klemmvorrichtung bzw. der äussere Kunstharzblock (2) so ausgebildet ist, dass dadurch der durch die Verjüngung der äusseren Elektrode (1) gebildete Spalt verschlossen wird.

7. Vorrichtung nach einem der Ansprüche 1 bis 6, dadurch gekennzeichnet, dass die Klemmvorrichtung als Membranpresssystem (2) aus zwei Teilen ausgebildet ist, zwischen denen ein Dichtungsmaterial (9) angeordnet ist, wobei der dichte Verschluss der Verdünnungskammer (7) dadurch erreicht wird, dass die beiden Membranen (6) zwischen dem Dichtungsmaterial (9) und je einem der beiden Teile des Membranpresssystems (2) hindurch geführt und die beiden Teile des Membranpresssystems (2) mit mechanischen Mitteln gegeneinander gepresst werden.

8. Vorrichtung nach Anspruch 7, dadurch gekennzeichnet, dass die beiden Teile des Membranpresssystems (2) so ausgebildet sind, dass damit auch das Verteil- bzw. Abnahmesystem (3) der Verdünnungskammer (7) und, gewünschtenfalls, in der äusseren Klemmvorrichtung auch das Verteil- bzw. Abnahmesystem (4) der Konzentratkammer festgeklemmt werden kann.

9. Vorrichtung nach Anspruch 7 oder 8, dadurch gekennzeichnet, dass ein Teil des Membranpresssystems (2) der inneren Klemmvorrichtung eine Ausnehmung zur Aufnahme des Verteil- bzw. Abnahmesystems (4) der Konzentratkammer aufweist.

10. Vorrichtung nach einem der Ansprüche 1 bis 6, dadurch gekennzeichnet, dass der Kunstharzblock (2), in dem die Ionenaustauschermembranen (6) verankert sind, aus einem Duroplast besteht.

11. Vorrichtung nach Anspruch 10, dadurch gekennzeichnet, dass das Verteil- bzw. Abnahmesystem (3) der Verdünnungskammer (7) im Kunstharzblock (2) fest verankert oder in einer Ausnehmung des Kunstharzblocks (2) angeordnet ist.

12. Vorrichtung nach einem der Ansprüche 1 bis 11, dadurch gekennzeichnet, dass sie von einem verstärkten Kunststoffmantel (12) umgeben ist.

## Claims

1. Apparatus for the continuous electrochemical desalination of aqueous solutions by means of direct current in the form of a wound module having a central electrode (1) around which an anion exchanger membrane and a cation exchanger membrane (6) are wound in such a way that a structure having at least approximately spiral cross section is produced and the ion exchanger membranes (6) enclose a dilution chamber (7) and a concentrate chamber along their spiral winding, and having an outer concentrically arranged counterelectrode (1) which encases the wound membrane arrangement, in which apparatus
- not only the inner edges of the two ion exchanger membranes (6) but also the outer edges of the two ion exchanger membranes (6) are mutually sealed by means of a clamping device (2), or are anchored in a synthetic resin block (2), in such a way that the dilution chamber (7) is tightly sealed from the concentrate chamber and the electrodes (1) and the concentrate chamber is open towards the electrodes,
- the dilution chamber (7) has a distribution system for the solution to be treated and a removal system for the desalinated water (3), of which one is arranged at the inner boundary of the dilution chamber and the other at the outer boundary of the dilution chamber, and an ion exchanger resin and/or a spacer is accommodated in the dilution chamber (7),
- the concentrate chamber has a distribution system and a removal system (4) for the concentrate rinsing, of which one is arranged at the inner boundary of the concentrate chamber along the central electrode (1) and the other at the outer boundary of the concentrate chamber along the outer counterelectrode (1), and an ion exchanger resin and/or a spacer (5) is accommodated in the concentrate chamber, and
- the two end faces (11) of the apparatus are tightly sealed.

2. Apparatus according to Claim 1, characterised in that the central electrode (1) has a recess for receiving the inner clamping device or the inner synthetic resin block (2) over a part of its circumference in the axial direction.

3. Apparatus according to Claim 2, characterised in that the central electrode (1) has a constriction, deviating from the cylindrical shape, in the opposite direction to the winding direction of the membranes (6) at least over a part of its circumference on the side of the clamping device or of the synthetic resin block (2) lying in the winding direction in order to achieve a uniform spiral winding of the membranes (6).

4. Apparatus according to Claim 3, characterised in that the constriction of the circumference of the central electrode (1) corresponds at most to the thickness of the dilution chamber and the concentrate chamber taken together.

5. Apparatus according to one of Claims 1 to 4, characterised in that the outer counterelectrode (1) has a constriction, deviating from the cylindrical shape, in the opposite direction to the winding direction of the membranes (6) at least over a part of its circumference on the side of the outer clamping device or of the outer synthetic resin block (2) lying in the winding direction in order to achieve a spacing of the spiral winding of the membranes which is as uniform as possible.

6. Apparatus according to Claim 5, characterised in that the outer clamping device or the outer synthetic resin block (2) is constructed in such a way that the gap formed by the constriction of the outer electrode (1) is thereby sealed.

7. Apparatus according to one of Claims 1 to 6, characterised in that the clamping device is constructed as a membrane compression system (2) made of two parts, between which a sealing material (9) is arranged, the tight sealing of the dilution chamber (7) being achieved as a result of the fact that the two membranes (6) are passed between the sealing material (9) and one of the two parts of the membrane compression system (2) in each case and the two parts of the membrane compression system (2) are pressed against one another by mechanical means.

8. Apparatus according to Claim 7, characterised in that the two parts of the membrane compression system (2) are constructed in such a way that the distribution or removal system (3) of the dilution chamber (7) and, if desired, the distribution or removal system (4) of the concentrate chamber in the outer clamping device can also be firmly clamped therewith.

9. Apparatus according to Claim 7 or 8, characterised in that a part of the membrane compression system (2) of the inner clamping device has a recess for receiving the distribution or removal system (4) of the concentrate chamber.

10. Apparatus according to one of Claims 1 to 6, characterised in that the synthetic resin block (2) in which the ion exchanger membranes (6) are anchored is composed of a thermosetting plastic.

11. Apparatus according to Claim 10, characterised in that the distribution or removal system (3) of the dilution chamber (7) is firmly anchored in the synthetic resin block (2) or is arranged in a recess of the synthetic resin block (2).

12. Apparatus according to one of Claims 1 to 11, characterised in that it is surrounded by a reinforced polymeric jacket (12).

## Revendications

1. Dispositif pour la désalinisation électrochimique en continu de solutions aqueuses au moyen d'un courant continu, qui présente la forme d'un module enroulé comportant une électrode centrale (1) autour de laquelle une membrane d'échange d'anions et une membrane d'échange de cations (6) sont enroulées de telle sorte que l'on obtient une structure présentant une section transversale au moins approximativement en forme de spirale, et que les membranes d'échange d'ions (6) enferment le long de leur enroulement en forme de spirale une chambre de dilution (7) et une chambre à concentrat, et comportant une contre-électrode extérieure (1), disposée concentriquement, qui entoure l'agencement de membranes enroulées, tandis que
- tant les bords intérieurs des deux membranes d'échange d'ions (6) que les bords extérieurs des deux membranes d'échange d'ions (6) sont fermés l'un avec l'autre au moyen d'un dispositif de pinçage (2) ou sont ancrés dans un bloc de résine synthétique (2) de telle sorte que la chambre de dilution (7) soit fermée de manière étanche par rapport A la chambre à concentrat et aux électrodes, et que la chambre à concentrat soit ouverte par rapport aux électrodes,
- la chambre de dilution (7) présente un système de distribution de la solution à traiter et un système (3) d'extraction de l'eau désalinisée, dont l'un est disposé sur la limite intérieure de la chambre de dilution et l'autre sur la limite extérieure de la chambre de dilution, et une résine échangeuse d'ions et/ou un écarteur sont installés dans la chambre de dilution (7),
- la chambre à concentrat présente un système de distribution et un système de réception (4) pour le rinçage du concentrat, dont l'un est disposé sur la limite intérieure de la chambre à concentrat, le long de l'électrode centrale (1), et l'autre est disposé sur la limite extérieure de la chambre à concentrat, le long de la contre-électrode extérieure (1), et une résine échangeuse d'ions et/ou un écarteur (5) sont installés dans la chambre à concentrat, et
- les deux côtés frontaux (11) du dispositif sont fermés de manière étanche.

2. Dispositif selon la revendication 1, caractérisé en ce que l'électrode centrale (1) présente sur une partie de sa périphérie un alignement aligné dans la direction axiale pour la réception du dispositif intérieur de pinçage ou du bloc intérieur de résine synthétique (2).

3. Dispositif selon la revendication 2, caractérisé en ce qu'en vue de la création d'un enroulement régulier en forme de spirale des membranes (6), l'électrode centrale (1) présente au moins sur une partie de sa périphérie, sur le côté du dispositif de pinçage ou du bloc de résine synthétique (2) qui est situé dans la direction de l'enroulement, à la direction d'enroulement des membranes (6), un rétrécissement qui s'écarte de la forme du cylindre dans la direction opposée.

4. Dispositif selon la revendication 3, caractérisé en ce que le rétrécissement de la périphérie de l'électrode centrale (1) correspond au plus à l'épaisseur de la chambre de dilution et de la chambre à concentrat.

5. Dispositif selon l'une des revendications 1 à 4, caractérisé en ce qu'en vue de la création d'un écart aussi régulier que possible de l'enroulement en forme de spirale des membranes (6), la contre-électrode extérieure (1) présente au moins sur une partie de sa périphérie, sur le côté du dispositif extérieur de pinçage ou du bloc extérieur de résine synthétique (1) qui est situé dans la direction de l'enroulement, un rétrécissement s'écartant de la forme cylindrique dans la direction opposée à la direction d'enroulement des membranes (6).

6. Dispositif selon la revendication 5, caractérisé en ce que le dispositif extérieur de pinçage ou le bloc extérieur de résine synthétique (2) sont configurés de telle sorte que l'interstice formé par le rétrécissement de l'électrode extérieure (1) soit fermé par eux.

7. Dispositif selon l'une des revendications 1 à 6, caractérisé en ce que le dispositif de pinçage est configuré sous la forme d'un système (2) de pressage des membranes, constitué de deux parties entre lesquelles est disposé un matériau d'étanchéité (9), tandis que la fermeture étanche de la chambre; de dilution (7) est obtenue par le fait que les deux membranes (6) sont passées entre le matériau d'étanchéité (9) et chaque fois l'une des deux parties du système (2) de pressage des membranes, et les deux parties du système (2) de pressage des membranes sont pressées l'une contre l'autre par des moyens mécaniques.

8. Dispositif selon la revendication 7, caractérisé en ce que les deux parties du système (2) de pressage des membranes sont configurées de telle sorte que le système de distribution et d'extraction (3) de la chambre de dilution (7) puisse être pincé par ces deux parties et, au cas où on le souhaite, que le système de distribution et d'extraction (4) de la chambre à concentrat puisse également être pincé dans le système extérieur de pinçage.

9. Dispositif selon la revendication 7 ou 8, caractérisé en ce qu'une partie du système (2) de pressage des membranes du dispositif intérieur de pinçage présente une découpe pour la réception du système de distribution et d'extraction (4) de la chambre à concentrat.

10. Dispositif selon l'une des revendications 1 à 6, caractérisé en ce que le bloc de résine synthétique (2) dans lequel sont ancrées les membranes d'échange d'ions (6) est réalisé en résine thermodurcissable.

11. Dispositif selon la revendication 10, caractérisé en ce que le dispositif de distribution ou de reprise (3) de la chambre de dilution (7) est ancré fixement dans le bloc de résine synthétique (2) ou est disposé dans une découpe du bloc de résine synthétique (2).

12. Dispositif selon l'une des revendications 1 à 11, caractérisé en ce qu'il est entouré par une enveloppe (12) en matière synthétique renforcée.
